# EUROPEAN PATENT SPECIFICATION

(11) **EP 4 594 396 B1**
(45) Date of publication and mention of the grant of the patent: **04.11.2026**
(21) Application number: 23798044.6
(22) Date of filing: 28.09.2023
(51) Int. Cl.: C08J 3/20, B29B 7/74, B29C 48/00, B29C 48/07, B29B 7/72, B29B 7/88, B29C 48/285, B29B 7/82, B29B 7/90, B29C 48/12, B29C 48/25, B29C 48/88, B29C 48/385, B29B 7/38

(54) **METHOD OF MAKING A RUBBER COMPOSITION WITH IMPROVED PROCESSABILITY**
VERFAHREN ZUR HERSTELLUNG EINER KAUTSCHUKZUSAMMENSETZUNG MIT VERBESSERTER VERARBEITBARKEIT
PROCÉDÉ DE FABRICATION D'UNE COMPOSITION DE CAOUTCHOUC PRÉSENTANT UNE APTITUDE AU TRAITEMENT AMÉLIORÉE

(30) Priority: 28.09.2022 US 202263410889 P
(43) Date of publication of application: 06.08.2025
(73) Proprietor: COMPAGNIE GENERALE DES ETABLISSEMENTS MICHELIN, 63000 Clermont-Ferrand (FR)
(72) Inventor: SABADIN DE AZEVEDO, Pedro Henrique, Greenville, South Carolina 29605 (US); BERGMAN, Brian R., Greenville, South Carolina 29605 (US); CATO, Anthony, Greenville, South Carolina 29605 (US); SANTANA, Gabriel, Greenville, SC 29605 (US)
(74) Representative: Casalonga
(86) International application number: PCT/US2023/075417
(87) International publication number: WO 2024/073598

(56) References cited:
- EP-B1- 0 994 150
- US-A1- 2010 063 189
- US-B2- 10 328 608

## Description

### FIELD OF THE INVENTION

The subject matter of the present invention relates to a process of making a rubber composition having improved green rubber properties for improved processability.

### BACKGROUND OF THE INVENTION

Elastomers have long been used to build tires for vehicles. Elastomers provide good flexibility, traction and durability making elastomer compositions ideal materials for the road interface component of a vehicle and particularly suitable for the tread component of tires. Fillers substances, such as carbon black, titanium dioxide and talc, added to the rubber composition provide additional reinforcement to the elastomer composition. Silica fillers in particular provide superior wear resistance and traction in both dry and wet conditions. Full-silica elastomer mixes, defined herein as having 50 parts per hundred ("phr") by weight of the elastomer, are particularly useful in tread rubber applications. Most of full silica mixes tend to have significant variability in properties during their aging in the uncured rubber state, also known as "green rubber" state. These green rubber properties include varying viscosity, extrusion aspect (or roughness), die swell, and elasticity. Such variability of green rubber properties can limit the usage of the product in extruders.

Silane is a well-known coupling agent used to increase the bonding of the silica filler to the rubber compound. The silane coupling agent has three fundamental functions in silica mixes: cover the silica and hide the highly polar silanol groups from the hydrophobic elastomer, provide a chemical link between the silica and the elastomer, and adjust the curing of the silica mix. The use of silane has made high silica mixes useful for tires, providing excellent traction and wear properties that could not have been obtained before with carbon black reinforced rubber compositions.

Mixing processes utilizing multiple mixers, such as those described in US Patent No. 10,328,608 are used to create rubber mixtures for new industrial processes. These newer mixing methods enable efficient rubber mixing processes where multiple rubber mixes are made on the same equipment and formed into a sheet product and stored until needed at a later time. The use of the green rubber sheet product is limited, however, by the quality of green rubber. Often the rubber extruded has undesirable die swell, where the rubber does not hold the shape of the die from which it is extruded, or has an undesirable rough surface upon extrusion. Such surface roughness may make further processing more difficult by creating holes in the profiled product grooves or creating a texture or grooves making it difficult to evacuate water used to cool the rubber during intermediate steps making subsequent drying stages more difficult or affect tire uniformity or finished weight variations in the finished product. Conventional methods of controlling die swell and surface roughness involve reducing the speed of the extruder screw speed to reduce extrudate speed, or addition processing aids. These changes, such as reducing extrusion speed affect the cost of manufacturing by slowing down production, and addition of process aids can affect the final product's physical properties.

### SUMMARY OF THE INVENTION

The present invention is defined by the subject-matter of the appended set of claims. It has now been found that the disadvantages in the state of the art of die extrusion of high silica mixes can be greatly mitigated by replacing the polysulfide silanes used now with disulfide silanes.

Accordingly, the present invention relates to the use of disulfide silanes in rubber mixtures that mix-extruded as an intermediate green rubber product with superior green rubber properties where the rubber is comprised of a silica filler and a diene elastomer mixed in a first mixer then passed through a pair of cylinders for forming a rubber sheet, cooled, and mixed in a second mixer before being finalized.

In one exemplary embodiment, the disulfide silane described above has at least one alkoxylilyl group. In another exemplary embodiment, the disulfide silane is a bifunctional sulfur-containing organosilane. In at least one exemplary embodiment, the disulfide silane is bis(triethoxysilylpropyl)disulfide.

While the rubber compositions disclosed herein may be useful for a broad range of tire treads, they are particularly useful in particular embodiments of the present invention as all-weather tires and/or Summer tires passenger cars and light trucks.

As used herein, "phr is "parts per hundred parts of rubber by weight' and is a common measurement in the art wherein components of a rubber composition are measured relative to the total weight of rubber in the composition, i.e., parts by weight of the component per 100 parts by weight of the total rubber(s) in the composition.

In at least one of the above exemplary embodiments, the rubber composition is passed through an extruder to make a profiled product. For example, one such second extruder may be a flat nose extruder.

In at least one embodiment the silica filler represents 45phr to 140phr. More specifically, at least one embodiment may have a silica content of 60phr to 90phr.

Some embodiments may contain a disulfide silane content present between 5phr to 20phr. More specifically, at least one embodiment has a disulfide silane content of 6phr to 10phr. In the case for example of tire treads for passenger vehicles, the coupling agent may be less than 20 wt.% or even less than 12 wt.% or 8 wt.% relative to the total weight of the silica filler.

The present invention includes rubber mixtures containing rubber, a silica filler present in an amount of 45phr to 140phr, a disulfide silane content added in an amount of 6phr to 20phr, which is mixed in a first mixer, cooled by passing through a pair of cylinders and sprayed with a cooling solution, then mixed in a second mixer and finalized as a green rubber sheet.

Other components, such as vulcanizing agents, accelerators, anti-oxidants, waxes, resins or oils, may be added to the composition during processing of the composition, or may be added at a later step.

The use of disulfide silane in the rubber mix produces a rubber mixture that exhibits favorable extrusion properties, having a smooth outer surface aspect and no lump formations. The disulfide silane rubber mixture provided minimal die swell compared with mixes made with polysulfide silane.

Surface roughness aspects of the extruded green rubber, also referred herein to as surface roughness or aspect, improve with time, which is particularly interesting as surface roughness or aspect was deteriorated with time in the rubber mixtures using polysulfide silane. Die swell, already showing favorable values shortly after being extruded, also shows little growth over time compared to rubber compositions comprising polysulfide silane. Such a properties shows that the inventive disulfide silane containing rubber mixture lends itself to being prepared then stored for extended periods before being further processed and/or placed into a mold and vulcanized. Such age tolerant rubber mixes allow improved industrial processing techniques, making machinery utilization more efficient by allowing the same machinery to be utilized for multiple mixes, extending time for shipping to other locations, and reduces the scrapping of green rubber compositions that would have otherwise "aged-out" and been deemed too old for further processing into a finished product.

Significantly, it has been found that rubber mixtures prepared with disulfide silanes according to the invention do not exhibit any significant disadvantages in respect to their engineering properties compared with the comparative reference material containing more traditional polysulfide silanes.

This invention is particularly suited for high silica content rubber compositions. Other fillers may be added to the mix including carbon blacks, such as lamp black, furnace black or gas black, as well as silicates such as silicic acids, synthetic silicates such as aluminum silicate or alkaline earth metal silicates, or natural silicates such as kaolin and other naturally occurring silicic acids and mixtures thereof.

A "diene" elastomer should be understood to mean an elastomer resulting at least in part from diene monomers. The term "diene elastomer" and "rubber" may be used interchangeably, as the two terms are considered herein to be synonymous. The rubber component of the rubber mixture is not particularly limited and may be comprised of natural rubber and synthetic rubber such as polybutadiene (BR), polyisoprene (IR), styrene/butadiene copolymers (SBR), isobutylene/isoprene copolymers (IIR) butadiene acrylonitrile copolymers (NBR) partially hydrogenated or fully hydrogenated NBR (HNBR) ethylene /propylene/diene copolymers (EDPM). Each of these diene rubbers may be used alone, or two or more of these may be used in combination.

Crosslinking agents such as sulfur-containing or peroxide-containing crosslinking agents may be added, in addition to vulcanization accelerators such a mercaptobenzthiazoles, sulfonamides, guanidines, thiurams, dithiocarbamates, thioureas and thiocarbonates.

Other components may be included in the rubber mixture, including reaction accelerators, antioxidants, heat stabilizers, light stabilizers, antiozonants, processing ads, plasticizers, tackifiers, dyes, pigments, waxes, extenders, organic acids, retarders, metal oxides and activators as known in the industry.

The rubber mixture, comprising of a vulcanizable elastomer, a silica filler, and a disulfide silane, is prepared in an internal mixer having a predetermined fill volume. Once mixed the rubber is dropped or otherwise removed from the mixer it is placed though an external mixer, such as through a pair of cylinders, where it is cooled. The cooling may be improved using a cooling spray, such as a water spray, and the cylinders themselves may be cooled by having cooling liquid contained therein as known in the art. Excess water may be aspirated, and the rubber mixture is then placed into a second mixer. Additional components may be added to the rubber mix, such as one or more vulcanizates, vulcanizing agents, other components at various stages of the process, such as at the second mixer. The rubber mixture is finalized into a final green rubber where it is later extruded to a final form, or subject to further processing before being placed into a mold and vulcanized.

The vulcanization of the rubber mixtures may be carried out at temperatures and pressures as practiced in the industry. For example, vulcanization may be carried out at temperatures of 100°C to 200°C under a pressure of 10 bar to 200 bar.

### BRIEF DESCRIPTION OF THE DRAWINGS

A full and enabling disclosure of the present invention, including the best mode thereof, directed to one of ordinary skill in the art, is set forth in the specification, which makes reference to the appended figures, in which:

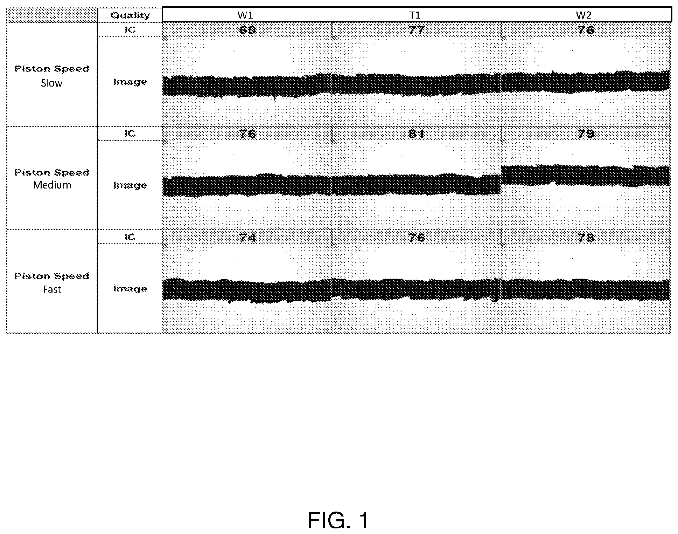

FIG. 1 provides a cross section view of the extrudates tested showing surface roughness.

### DETAILED DESCRIPTION OF THE INVENTION EXAMPLES

The present invention relates to the use of disulfide silanes in rubber mixtures that are mix-extruded as an intermediate green rubber product with superior green rubber properties, such as reduced die swelling and surface smoothness, where the rubber is a high silica mix comprised of a silica filler and a diene elastomer mixed in a first mixer then passed through a pair of cylinders for forming a rubber sheet, cooled, and mixed in a second mixer before being extruded. For purposes of describing the invention, reference now will be made in examples of embodiments of the invention. Each example is provided by way of explanation of the invention, not limitation of the invention. For instance, features or steps illustrated or described as part of one embodiment, can be used with another embodiment or steps to yield a still further embodiments or methods.

General processes for the preparation of rubber mixtures and vulcanizates thereof are well known in the art and are modified as described herein to comply with the invention disclosed.

Two rubber formula compositions were prepared in accordance with the formula in Table 1. W1 containing a polysulfide silane and a test composition T1 containing a disulfide silane. The green rubber properties of the uncured rubber compositions were tested to evaluate the processability and time stability of the properties tested of the green rubber compositions.

The rubber composition is prepared by placing the elastomers, carbon black, silica, and silane in a first mixer which is closed and mixed. The mixture is dropped and cooled by passing through a pair of cylinders and cooled by means of water spray. Excess water is aspirated from the composition and placed into a second mixer where the remaining components are added. The composition is mixed again. The composition is extruded as a flat sheet product. In this example, the samples are then extruded for testing.

**Table 1.**

| | **W1** | **T1** |
|---|---|---|
| BR | 10 | 10 |
| Non-Functionalized SBR | 90 | 90 |
| CB | 7 | 7 |
| SILICA | 75 | 75 |
| Processing Aid | 1.5 | 1.5 |
| Antiozonant | 1.17 | 1.17 |
| WAX | 1.87 | 1.87 |
| 6PPD | 2.8 | 2.8 |
| POLYSULFIDE SILANE | 5.63 | |
| DISULFIDE SILANE | | 5.18 |
| RESIN | 20 | 18 |
| ACCELERATOR CBS | 1.75 | 1.75 |
| ACCELERATOR DPG | 1.61 | 1.61 |
| SULFUR | 1.1 | 1.75 |
| STEARIC ACID | 1.8 | 1.8 |
| ZnO | 1.5 | 1.5 |
| OIL | 10 | 12 |

The green rubber extrudate surface roughness was characterized as at piston speeds of slow, medium and fast extrudate speeds s at 110°C by examination of the cross section of the extrudate. The images are graded and a higher index correlates with smoother extrudate surface, while a lower index is indicative of a rougher surface. A smooth surface is reported as "100". An index value between 100 and 90 is regarded as acceptable while an index value between 80 and 90 is considered minor roughness and a index value of less than 80 is considered not acceptable.

Die swell measures the ratio of the thickness of the extrudate compared to the thickness of the die forming the extrudate. A value over 1 indicates a larger extrudate than the die which formed it. Measurements were taken from samples extruded at 0.05 mm/s, 0.1 mm/s, 0.25 mm/s and 0.5 mm/s at 90°C.

**Table 1**

| | W1 | T1 |
|---|---|---|
| Mooney (ML 1+4) MU | 111 | 108.4 |
| 10% Modulus (MPa) | 5.57 | 5.74 |
| 100% Modulus (MPa) | 1.84 | 1.83 |
| 300% Modulus (MPa) | 2.14 | 2.09 |
| Tensile Strength (MPa) | 23.94 | 23.26 |
| Elongation at Break % | 478.6 | 479.4 |
| Hardness, Shore A | 66.16 | 66.52 |
| Surface Roughness (slow speed) Index | 69 | 77 |
| Surface Roughness (medium speed) | 76 | 81 |
| Surface Roughness (fast speed) | 74 | 76 |
| **Die Swell (0.05 mm/s) @ 37 s-1 ?** | 1.27 | 1.24 |
| Die Swell (0.1 mm/s) @ **37 s-1 ?** | 1.26 | 1.22 |
| Die Swell (0.25 mm/s) @ **37 s-1 ?** | 1.24 | 1.20 |
| Die Swell (0.5 mm/s) @ **37 s-1 ?** | 1.23 | 1.20 |

The tests show that the mix having disulfide silane (T1) displayed smoother surface of the extruded product, which was particularly visible at low shear rates, than polysulfide silane containing compounds (W1). Traditional processing techniques to control surface roughness, also referred to herein as of an extruded rubber product would result in slower die extrusion rates, which would impact processing times, or the introduction of processing aids, such as increased oil or resin, which can affect the final product's physical properties. The use of a disulfide silane surprisingly improved processability of the rubber compound when the rubber compound mixed in an internal mixer, cooled through an open mixer, then mixed again an extruded.

The die swell results show that the disulfide mix (T1) improved over the polysulfide mix (W1) processed under the same conditions.

The disulfide silane mix (T1) properties also surprisingly showed to be less susceptible to age associated degradation than the polysulfide silane mix (W1) in both surface roughness and die swell tested at time of extrusion, 14 days after extrusion and 28 days after extrusion. Table 2 below shows the test results.

**Table 2**

| | W1 (Initial) | T1 (Initial) | W1 (+14 days) | T1 (+14 days) | W1 (+14 days) | T1 (+28 days) |
|---|---|---|---|---|---|---|
| Surface Roughness | 79 | 81 | 72 | 82 | 68 | 86 |
| Die Swell (0.05 mm/s) @ **37 s-1 ?** | 1.24 | 1.22 | 1.27 | 1.23 | 1.29 | 1.24 |
| Die Swell (0.1 mm/s) | 1.23 | 1.21 | 1.25 | 1.22 | 1.26 | 1.22 |
| Die Swell (0.25 mm/s) | 1.21 | 1.18 | 1.23 | 1.20 | 1.25 | 1.20 |
| Die Swell (0.5 mm/s) | 1.21 | 1.19 | 1.22 | 1.19 | 1.24 | 1.20 |
| Embossing (slow speed) - Index | 5 | 3 | 9 | 3 | 11 | 2 |
| Embossing (high speed) - Index | 4 | 4 | 5 | 4 | 6 | 4 |

Testing showed that the polysulfide silane composition (W1) exhibited increasing surface roughness over time, while the surface roughness of the disulfide silane mix (T1) was maintained, and even improved over time. Likewise, the embossing properties tested of the material extruded at low and high speeds both showed that the disulfide composition was consistent even after 28 days of aging, while the embossing value of the polysulfide mix (W1) increased over time, doubling in the case of the low spped extrudate, and increasing 50% in the case of the high speed extrudate W1 mix. Die swell measurements over the 14-day and 28-day period showed excellent dimensional stability of the extruded cross section of the disulfide silane mix (T1) while the polysulfide silane mix (W1) increased over time.

The excellent aging properties as a result of using disulfide silane when the rubber is processed by mixing in a first mixer, cooled by passing through a pair of cylinders, mixed in a second mixer and extruded is surprising. This discovery is particularly useful in improving the processing of rubber by allowing for a rubber extrudate to be prepared in an economical fashion, stored, and further processed or incorporated into a mix at a later time while minimizing the adverse effects of aging on the rubber composition.

Selected combinations of aspects of the disclosed technology correspond to a plurality of different embodiments of the present invention. It should be noted that each of the exemplary embodiments presented and discussed herein should not insinuate limitations of the present subject matter. Additionally, certain features may be interchanged with similar devices or features not expressly mentioned which perform the same or similar function.

The terms "a" "an" and the singular forms of words shall be taken to include the plural form of the same words, such that the terms mean that one or more of something is provided. The terms "at least one" and "one or more" are used interchangeably. Ranges that are described as being "between a and b" are inclusive of the values for "a" and "b."

## Claims

1. A process of making a rubber composition comprising:
mixing a composition comprised of a diene elastomer, a silica filler and a disulfide silane in a first mixer;
cooling the rubber mixture by:
passing the rubber mixture through a pair of cylinders for forming the mixture into a rubber sheet; and
spraying the rubber with a cooling liquid;
mixing the rubber mixture an additional time in a second mixer; and
extruding the rubber mixture through an extruder.

2. The process of claim 1 further comprising:
passing the rubber composition through a second extruder to make a finished profiled product.

3. The process of claim 2 wherein the second extruder is a flat nose extruder.

4. The process of claim 3 wherein the second extruder is a cold-feed pin-barrel rubber-processing extruder.

5. The process of any one of the above claims wherein the silica filler represents 10% to 40% of the composition by weight of the entire composition.

6. The process of claim 5 wherein the silica filler represents 30 to 35% of the composition by weight of the entire composition.

7. The process of any one of the above claims wherein the disulfide silane is present between 20 wt.% to 6 wt.% relative to the total weight of the silica filler.

8. The process of claim 7 wherein the disulfide silane is present between 12 wt.% to 6 wt.% relative to the total weight of the silica filler.

9. The process of any one of the above claims wherein the disulfide silane is a disulfide silane having at least one alkoxylilyl group.

10. The process of claim 7 wherein the disulfide silane is a bifunctional, sulfur-containing organosilane.

11. The process of claim 8 wherein the disulfide silane is bis(triethoxysilylpropyl)disulfide.

12. The process of any one of the above claims wherein the cooling liquid is water.

13. The process of any one of the above claims wherein the rubber composition is vulcanized into a finished product.

14. The process of claim 11 wherein the finished product is a tire.

## Patentansprüche

1. Verfahren zur Herstellung einer Kautschukzusammensetzung mit den folgenden Schritten:
Mischen einer Zusammensetzung, die aus einem Dienelastomer, einem Siliciumdioxidfüllstoff und einem Disulfidsilan besteht, in einem ersten Mischer;
Kühlen der Kautschukmischung durch:
Hindurchleiten der Kautschukmischung durch ein Paar von Zylindern, um die Mischung zu einer Kautschukplatte zu formen; und
Besprühen des Kautschuks mit einer Kühlflüssigkeit;
Mischen der Kautschukmischung ein weiteres Mal in einem zweiten Mischer; und
Extrudieren der Kautschukmischung durch einen Extruder.

2. Verfahren nach Anspruch 1, ferner mit dem folgenden Schritt:
Hindurchleiten der Kautschukzusammensetzung durch einen zweiten Extruder, um ein profiliertes Endprodukt herzustellen.

3. Verfahren nach Anspruch 2, wobei der zweite Extruder ein Flachnasenextruder ist.

4. Verfahren nach Anspruch 3, wobei der zweite Extruder ein Kaltzufuhr-Stiftzylinder-Extruder zur Kautschukverarbeitung ist.

5. Verfahren nach einem der obigen Ansprüche, wobei der Siliciumdioxidfüllstoff 10 Gew.-% bis 40 Gew.-% der Zusammensetzung der gesamten Zusammensetzung darstellt.

6. Verfahren nach Anspruch 5, wobei der Siliciumdioxidfüllstoff 30 Gew.-% bis 35 Gew.-% der Zusammensetzung der gesamten Zusammensetzung darstellt.

7. Verfahren nach einem der obigen Ansprüche, wobei das Disulfidsilan in einer Menge zwischen 20 Gew.-% und 6 Gew.-% bezogen auf das Gesamtgewicht des Siliciumdioxidfüllstoffs vorhanden ist.

8. Verfahren nach Anspruch 7, wobei das Disulfidsilan in einer Menge zwischen 12 Gew.-% und 6 Gew.-% bezogen auf das Gesamtgewicht des Siliciumdioxidfüllstoffs vorhanden ist.

9. Verfahren nach einem der obigen Ansprüche, wobei es sich bei dem Disulfidsilan um ein Disulfidsilan mit mindestens einer Alkoxylilylgruppe handelt.

10. Verfahren nach Anspruch 7, wobei es sich bei dem Disulfidsilan um ein bifunktionelles, schwefelhaltiges Organosilan handelt.

11. Verfahren nach Anspruch 8, wobei es sich bei dem Disulfidsilan um Bis(triethoxysilylpropyl)disulfid handelt.

12. Verfahren nach einem der obigen Ansprüche, wobei es sich bei der Kühlflüssigkeit um Wasser handelt.

13. Verfahren nach einem der obigen Ansprüche, wobei die Kautschukzusammensetzung zu einem Endprodukt vulkanisiert wird.

14. Verfahren nach Anspruch 11, wobei das Endprodukt ein Reifen ist.

## Revendications

1. Procédé de fabrication d'une composition de caoutchouc comprenant :
le mélange d'une composition comprenant un élastomère diène, une charge de silice et un silane disulfure dans un premier mélangeur ;
le refroidissement du mélange de caoutchouc par :
passage du mélange de caoutchouc à travers une paire de cylindres pour donner au mélange la forme d'une feuille de caoutchouc ; et
pulvérisation d'un liquide réfrigérant sur le caoutchouc ;
le mélange supplémentaire de la composition de caoutchouc dans un deuxième mélangeur ; et
l'extrusion du mélange de caoutchouc à travers une extrudeuse.

2. Procédé selon la revendication 1 comprenant en outre : le passage de la composition de caoutchouc à travers une deuxième extrudeuse pour obtenir un produit profilé fini.

3. Procédé selon la revendication 2, dans lequel la deuxième extrudeuse est une extrudeuse à nez plat.

4. Procédé selon la revendication 3, dans lequel la deuxième extrudeuse est une extrudeuse à barillet à broches à alimentation à froid pour le traitement du caoutchouc.

5. Le procédé selon l'une quelconque des revendications ci-dessus dans lequel la charge de silice représente 10 % à 40 % en poids de la composition totale.

6. Procédé selon la revendication 5 dans lequel la charge de silice représente 30 à 35 % en poids de la composition par rapport au poids total de la composition.

7. Procédé selon l'une quelconque des revendications ci-dessus dans lequel le silane disulfure est présent entre 20 % en poids et 6 % en poids par rapport au poids total de la charge de silice.

8. Procédé selon la revendication 7 dans lequel le silane disulfure est présent entre 12 % en poids et 6 % en poids par rapport au poids total de la charge de silice.

9. Procédé selon l'une quelconque des revendications ci-dessus dans lequel le silane disulfure est un silane disulfure présentant au moins un groupe alcoxysilyle.

10. Procédé selon la revendication 7 dans lequel le silane disulfure est un organosilane bifonctionnel contenant du soufre.

11. Procédé selon la revendication 8 dans lequel le silane disulfure est le bis(triéthoxysilylpropyl)disulfure.

12. Procédé selon l'une quelconque des revendications ci-dessus dans lequel le liquide réfrigérant est de l'eau.

13. Procédé selon l'une quelconque des revendications ci-dessus dans lequel la composition de caoutchouc est vulcanisée en un produit fini.

14. Procédé selon la revendication 11 dans lequel le produit fini est un pneu.
